(19) Europäisches Patentamt
European Patent Office
Office européen des brevets

(11) **EP 4 343 015 A1**

(12) **EUROPEAN PATENT APPLICATION**
published in accordance with Art. 153(4) EPC

(43) Date of publication:
**27.03.2024 Bulletin 2024/13**

(21) Application number: **22804919.3**

(22) Date of filing: **13.05.2022**

(51) International Patent Classification (IPC):
**C23C 2/12** (2006.01)   **C23C 2/40** (2006.01)
**C23C 2/02** (2006.01)   **C23C 28/02** (2006.01)
**C22C 38/38** (2006.01)   **C22C 38/06** (2006.01)
**C22C 38/00** (2006.01)   **C22C 38/28** (2006.01)
**C21D 8/02** (2006.01)

(52) Cooperative Patent Classification (CPC):
**B21C 47/02; C21D 8/02; C22C 38/00; C22C 38/06;**
**C22C 38/28; C22C 38/38; C23C 2/02; C23C 2/12;**
**C23C 2/40; C23C 28/02**

(86) International application number:
**PCT/KR2022/006922**

(87) International publication number:
**WO 2022/245064 (24.11.2022 Gazette 2022/47)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **21.05.2021   KR 20210065296**

(71) Applicant: **POSCO Co., Ltd**
**Pohang-si, Gyeongsangbuk-do 37859 (KR)**

(72) Inventors:
• **KIM, Sang-Heon**
  **Gwangyang-si, Jeollanam-do 57807 (KR)**

• **OH, Jin-Keun**
  **Gwangyang-si, Jeollanam-do 57807 (KR)**
• **KIM, Seong-Woo**
  **Gwangyang-si, Jeollanam-do 57807 (KR)**
• **LEE, Sea-Woong**
  **Gwangyang-si, Jeollanam-do 57807 (KR)**
• **CHUN, Hyo-Sik**
  **Gwangyang-si, Jeollanam-do 57807 (KR)**
• **SO, Seul-Gi**
  **Pohang-si, Gyeongsangbuk-do 37877 (KR)**

(74) Representative: **Meissner Bolte Partnerschaft**
**mbB**
**Patentanwälte Rechtsanwälte**
**Postfach 86 06 24**
**81633 München (DE)**

(54) **PLATED STEEL SHEET FOR HOT PRESS FORMING HAVING EXCELLENT HYDROGEN EMBRITTLEMENT RESISTANCE, HOT PRESS FORMED PARTS, AND MANUFACTURING METHODS THEREOF**

(57)     The present invention relates to: a plated steel sheet which is for hot forming, has excellent hydrogen embrittlement resistance, and includes an Al-based plating layer formed on the surface of a base steel sheet, wherein the average Ni content in the Al-based plating layer is 0.05-0.35 wt%; and a method for manufacturing same.

[FIG. 3]

EP 4 343 015 A1

**Description**

Technical Field

The present disclosure relates to a plated steel sheet for hot press forming (HPF) having excellent hydrogen embrittlement resistance and hot press formed parts, used as vehicle body parts, and manufacturing methods thereof.

Background Art

Hot press formed parts have recently been widely used in structural members such as vehicles for the purpose of improving fuel efficiency and protecting passengers by reducing the weight of vehicles, and have been particularly widely used in bumpers, doors, or filler reinforcement materials that require ultra-high strength or energy absorbency. Specifically, when hot press formed parts are used, plated steel sheets of which the surface is plated to ensure corrosion resistance have been widely used.

Patent Document 1 is representative technology for the hot press forming technique. According to Patent Document 1, after heating an Al-Si plated steel sheet at 850°C or higher, a hot press forming process and a cooling process by a press are performed to form the structure of a member in a martensite phase, thus securing ultra-high strength. When the ultra-high strength is secured by using such a hot press forming technique, since components are molded at high temperatures, it is possible to easily mold complex shapes. In addition, a lightweight effect may be expected simultaneously with high strength through an increase in strength according to rapid cooling in the mold.

However, it is known that the martensite structure has low resistance to hydrogen embrittlement. Specifically, when residual stress is present due to rapid cooling after heating and the amount of diffusible hydrogen in steel increases, components manufactured after a hot press forming process may be subject to delayed fracture caused by hydrogen embrittlement, which may limit the application of components. Therefore, there is a need for a method to solve such problems.

Patent Document 1: U.S. Patent No. 6296805

Summary of Invention

Technical Problem

An aspect of the present disclosure is to provide a plated steel sheet for hot press forming (HPF) having excellent hydrogen embrittlement resistance and hot press formed parts manufactured using the plated steel sheet, and manufacturing methods thereof, due to reduced occurrence of delayed fracture caused by hydrogen embrittlement of the hot press formed parts.

The subject of the present disclosure is not limited to the above. A person skilled in the art will have no difficulty understanding the further subject matter of the present disclosure from the general content of this specification.

Solution to Problem

According to an aspect of the present disclosure, a plated steel sheet for hot press forming having excellent hydrogen embrittlement resistance may include: a base steel sheet; and

an Al-based plating layer formed on a surface of the base steel sheet,
wherein an average Ni content in the Al-based plating layer is 0.05 to 0.35 wt%.

According to another aspect of the present disclosure, a method of manufacturing a plated steel sheet for hot press forming having excellent hydrogen embrittlement resistance may include:

preparing a base steel sheet;
plating the prepared base steel sheet with Ni in a coating weight of 150 to 2500 mg/m$^2$; and
continuously annealing the Ni-plated cold rolled steel sheet, followed by Al-based plating.

According to another aspect of the present disclosure, hot press formed parts having excellent hydrogen embrittlement may include: base iron;

and an alloy plating layer formed on the base iron,
wherein a Ni content at a point (Nimax) in which the Ni content is the highest, up to 15 um in a depth direction from a surface of the alloy plating layer, is 0.1 to 0.75% wt%.

According to another aspect of the present disclosure, a method of manufacturing hot press formed parts having excellent hydrogen embrittlement resistance may include:

providing a blank including a base steel sheet and an Al-based plating layer formed on a surface of the base steel sheet, wherein an average Ni content in the Al-based plating layer is 0.05 to 0.35 wt%;
heating the blank in a temperature range of Ac3 to 975°C; and transferring and molding the heated blank to a press, and
cooling the blank at a cooling rate of 20°C/s or higher.

Advantageous Effects of Invention

According to an aspect of the present disclosure, when a plated steel sheet for hot press forming is hot press formed, the amount of diffusible hydrogen in steel can be reduced to provide hot press formed parts having excellent hydrogen embrittlement resistance.
The various and beneficial advantages and effects of the present disclosure are not limited to the aforementioned description, and will be more easily understood in the process of describing specific embodiments of the present disclosure.

Brief Description of Drawings

FIG. 1 is a graph of analyzing contents of Fe and Ni of an Al-based plating layer in a plated steel sheet for hot press forming of Invention Example 1 in example embodiments by Glow Discharge Optical Emission Spectroscopy (GDS).
FIG. 2 is a graph of analyzing the content of Ni in an alloy plating layer of hot press formed parts of Invention Example 3 in example embodiments by the GDS, through which a Ni-concentrated layer is illustrated.
FIG. 3 is a graph of analyzing the content of Ni in the alloy plating layer of the hot press formed parts of Invention Examples 1 to 3 and Comparative Example 2 in the example embodiments by the GDS.
FIG. 4 is a graph of illustrating results of measuring the content of Ni and the amount of diffusible hydrogen of each part at a Nimax point of the hot press formed parts of Invention Examples 1 to 8 and Comparative Examples 1 to 2 in the example embodiments.

Best Mode for Invention

The terminology used herein is for the purpose of describing particular embodiments only and is not intended to be limiting of the invention. Furthermore, in this specification, the singular also includes the plural unless specifically stated otherwise in the phrase.
As used herein, "comprises" and/or "comprising" embodies one or more other components and/or elements and does not exclude the presence or addition of other components.
Unless otherwise defined, all terms (including technical and scientific terms) used in the present specification may be used in a sense that can be commonly understood by those skilled in the art. In addition, it will be further understood that terms, such as those defined in commonly used dictionaries, should be interpreted as having a meaning that is consistent with their meaning in the context of the relevant art.
As a result of an in-depth study on hydrogen embrittlement of hot press formed pars, the present inventors have confirmed that in the process of heating a blank (manufactured from a plated steel sheet for hot press forming) having a plating layer such as aluminum during hot forming, water vapor present in a heat treatment furnace is adsorbed on a surface of the blank. Then, hydrogen generated while dissociating water is occluded in steel having an austenitic phase with high hydrogen solubility at high temperature.
However, the present inventors have known that when rapid cooling occurs due to hot press forming to change hydrogen to a martensite phase, the solubility of hydrogen decreases rapidly, and an alloy plating layer formed by alloying the plating layer acts as an obstacle to prevent hydrogen from being released. Accordingly, since a significant amount of diffusible hydrogen content may remain in steel, the possibility of crack generation due to hydrogen delayed fracture increases. Therefore, they have found that it is important to reduce the amount of diffusible hydrogen occluded during heat treatment.
Accordingly, the present inventors have found that while performing an analysis on the amount of diffusible hydrogen in steel that affects hydrogen embrittlement in a product made of steel for hot press forming, the amount of diffusible hydrogen can be reduced through Ni plating, thereby leading to the present disclosure.

Hereinafter, the present disclosure will be described in detail.

According to an aspect of the present disclosure, a plating steel sheet for hot press forming includes a base steel sheet and an Al-based plating layer formed on the base steel sheet, and the content of Ni in the Al-based plating layer may be 0.05 wt% or more.

Except for Ni, the Al-based plating layer is sufficient as long as it may be any Al-based plating which is widely used in a plated steel sheet performed by a person skilled in the art of the plated steel sheet for hot press forming, and the content or type of components thereof is not particularly limited. For example, the Al-based plating may include not only pure Al plating, but also plating performed by including some Si in Al.

The Al-based plating layer may include an Al-rich layer and a concentration gradient layer. The concentration gradient layer is a section formed including Fe by reacting the Fe of the base steel sheet with an Al-based plating component in the process of conducting Al-based plating with the base steel sheet. In the Al-based plating layer, it is not easy to clearly distinguish a boundary between the Al-rich layer and the concentration gradient layer. However, the content of Fe in the Al-rich layer is less than the content of Fe in the concentration gradient layer. For example, when the content of Fe in the Al-based plating layer is about 2 wt% or more, it may be understood that the content of Fe diffused in the base steel sheet is higher than plating components, which may be regarded as the boundary between the Al-rich layer and the base steel sheet, and a boundary between the concentration gradient layer and the base steel sheet may be seen to a point in which the content of Fe is about 80 wt%, but the boundary is not necessarily clearly distinguished.

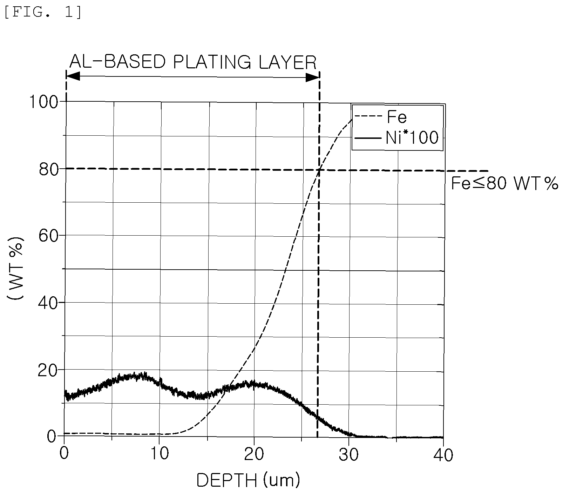

For example, referring to FIG. 1, FIG. 1 illustrates an analysis result of analyzing the plated steel sheet for hot press forming of Invention Example 1 in the following embodiment using Glow Discharge Optical Emission Spectroscopy (GDS) in depth direction from a surface thereof, and through the analysis result, it may be understood that the Al-based plating layer includes the Al-rich layer and the concentration gradient layer with the content of Fe up to 80 wt%.

In the plated steel sheet for hot press forming, preferably, the Al-based plating layer may have an average content of Ni of 0.05 wt% or more. As illustrated in FIG. 1, Ni included in the Al-based plating layer may be distributed in the depth direction. However, referring to FIG. 1, the content of Ni does not remain constant in the plating layer in the depth direction from the surface of the plated steel sheet. The average content refers to an average of the results of analyzing the Al-based plating layer in the depth direction of from the surface. As a preferred example embodiment of measuring the average content, the average content may be derived as an average value of the graph in a GDS analysis Ni profile as illustrated in FIG. 1. As will be described below, Ni included in the Al-based plating layer is meant to form a Ni-concentrated layer in an alloy plating layer formed in a hot press forming process, and the Ni-concentrated layer formed in this manner serves to prevent external hydrogen which may be occluded during a heat treatment process for hot press forming, from penetrating into the base steel sheet. Accordingly, the Ni-concentrated layer may serve to improve hydrogen embrittlement resistance of the hot press formed parts.

When the content of Ni is less than 0.05 wt%, sufficient Ni-concentrated layer is not formed during the hot press forming process, and accordingly, it may be difficult to effectively block external hydrogen occluded during the heat treatment of the hot press forming process. Meanwhile, with an increase in the content of Ni, the effect of blocking the external hydrogen increases. However, when the content of Ni exceeds 0.35 wt%, it may difficult to manufacture a uniform steel sheet due to an increase in costs according to increased Ni adhesion and an increase in non-uniformity in a width direction. Accordingly, it is preferable that the content of Ni does not exceed 0.35 wt%. More preferably, the range of content of Ni may be 0.055 to 0.335 wt%.

In the present disclosure, the type of base steel sheet and a component system of an alloy are not particularly limited, and the type thereof is regardless as long as it may be used as hot press formed parts. In a preferred example embodiment of the present disclosure, the base steel sheet includes, by wt%, carbon (C): 0.07 to 0.5%, silicon (Si): 0.05 to 1%, manganese (Mn): 0.5 to 4%, phosphorus (P): 0.001 to 0.015%, sulfur (S): 0.0001 to 0.02%, aluminum (Al): 0.01 to 0.1%, chromium (Cr): 0.01 to 1%, nitrogen (N): 0.001 to 0.02%, and a remainder of iron (Fe) and unavoidable impurities. Additionally, the base steel sheet may include titanium (Ti) : 0.1% or less (including 0) and boron (B): 0.01% or less (including 0). Hereinafter, each alloy component will be briefly described.

Carbon (C): 0.07~0.5 wt% (hereinafter referred to as %)

Carbon (C) is an element for improving strength and hardening capacity of hot press formed parts and needs to be appropriately included as an essential element for adjusting the strength. When the content of carbon (C) is less than 0.07%, since the hardening capacity is reduced, sufficient martensite may not be secured during reduction of a cooling rate, and it may be difficult to secure desired strength by ferrite generation. Accordingly, the content of carbon (C) may be preferably 0.07% or more. When the content of carbon (C) is more than 0.5%, the strength may excessively increase to result in embrittlement and to degrade weldability. Accordingly, it is preferable that the content of carbon (C) does not exceed 0.5%.

Silicon (Si): 0.05 to 1%

Silicon (Si) not only needs to be added as a deoxidizing agent in a steel making process, but also is a solid-solution reinforcing element, inhibits the generation of carbide, and has effective uniformity of an internal tissue. In addition, silicon (Si) contributes to an increase in the strength of hot press formed parts and is an effective element for material uniformity. However, when the content of silicon (Si) is less than 0.05%, it may be difficult to expect the aforementioned effect, and when the content of silicon (Si) exceeds 1%, plating properties may be greatly deteriorated due to excessive Si oxide generated on a surface of the steel sheet during annealing. Accordingly, the content of silicon (Si) may be preferably 1% or less.

Manganese (Mn): 0.5% to 4%

Manganese (Mn) is an element required for securing desired strength due to a solid-solution reinforcing effect and for suppressing the formation of ferrite during a hot press forming process through improvement of hardening capacity. When the content of manganese (Mn) is less than 0.5%, it may be difficult to obtain a sufficient hardening capacity effect, and other expensive alloy elements may be excessively required so as to compensate for insufficient hardening capacity, which may greatly increase manufacturing costs. On the other hand, when the Mn content exceeds 4%, band-like tissues arranged in a rolling direction on a microstructure may be intensified to result in non-uniformity of internal tissues, which may deteriorate collision resistance. Accordingly, the content of manganese (Mn) may be preferably 4% or less.

Phosphorus (P): 0.001 to 0.015%

Phosphorus (P) is present as an impurity in steel, and in order to maintain a minimum content of phosphorus (P) below 0.001%, high manufacturing costs may be required, which is not preferable. When a maximum content exceeds 0.015%, weldability of the hot press forming parts and material properties according to high temperature grain boundary segregation are deteriorated. Accordingly, it is preferable that the content of phosphorus (P) does not exceed 0.015%.

Sulfur (S): 0.0001 to 0.02%

Since sulfur (S) is an impurity and is an element that inhibits ductility, impact characteristics, and weldability of parts, a maximum content of sulfur (S) may be preferably 0.02%. In addition, in order to maintain a minimum content below 0.0001%, the manufacturing costs may be greatly increased, which is not preferable.

Aluminum (Al): 0.01 to 0.1%

Aluminum (Al) is an element that increases cleanness of steel by a deoxidizing action in a steelmaking process along with silicon (Si). When the content of aluminum (Al) is less than 0.01%, it may be difficult to obtain such an effect, and when the content of Aluminum (Al) exceeds 0.1%, high-temperature flexibility due to an excessive AlN precipitates formed during a continuous casting process may be deteriorated, which may cause slab cracks and manufacturing problems. Accordingly, an upper limit thereof may be preferably 0.1%.

Chrome (Cr): 0.01 to 1%

Chrome (Cr) is added as an element to secure the hardening capacity of steel like manganese (Mn) and to suppress the generation of ferrite after hot press forming. When the content of chrome (Cr) is less than 0.01%, it may be difficult to ensure such an effect. When the content of chrome (Cr) exceeds 1%, the hardening capacity may be insignificant as compared to an addition amount, and coarse iron carbide may be excessively formed to cause cracks during stress action, which may deteriorate the material. Accordingly, it is preferable that the content of chrome (Cr) does not exceed 1%.

Nitrogen (N): 0.001 to 0.02%

Nitrogen (N) is provided as an impurity in steel. In order to maintain the content of nitrogen (N) below 0.001%, excessive manufacturing costs are consumed, and when the content nitrogen (N) exceeds 0.02%, slab cracks may easily occur due to Al formation like the added aluminum (Al). Accordingly, it is preferable that the content of aluminum (Al) does not exceed 0.02%.

Titanium (Ti): 0.1% or less (including 0)

Since titanium (Ti) is bonded with nitrogen remaining as an impurity in steel to generate TiN, boron (B) for securing the hardening capacity may be protected so that it does not become a compound. To this end, the titanium (Ti) may be additionally included. In addition, TiC precipitates may be formed to expect the effect of strengthening precipitation and refining crystal grains. However, when the content of titanium (Ti) exceeds 0.1%, a large amount of coarse TiN may be formed to deteriorate the material of steel. Accordingly, it is preferable that an upper limit thereof does not exceed 0.1%.

Boron (B): 0.01% or less (including 0)

Boron (B) is an element capable of effectively improving hardening capacity, and may be segregated in prior-austenite grains to suppress embrittlement of hot press formed parts due to grain boundary segregation of P and/or S as impurities, and accordingly, boron (B) may be further included. However, when boron (B) exceeds 0.01%, embrittlement may be caused in hot rolling due to the formation of the $Fe_{23}CB_6$ composite compound. Accordingly, an upper limit thereof may preferably be 0.01%.

The remainder includes iron (Fe) and unavoidable impurities. The unavoidable impurities may be unintentionally mixed in a general steel manufacturing process, and the impurities may not be completely excluded, and the meaning thereof may be easily understood by a person skilled in the general steel manufacturing field. In addition, the present disclosure does not entirely exclude the addition of compositions other than the aforementioned steel composition.

Next, a method of manufacturing a plated steel sheet for hot press forming according to another aspect of the present disclosure, will be described in detail. The described manufacturing method is a preferred example of manufacturing the above-described plated steel sheet for hot press forming, and is not necessarily manufactured thereby.

The manufacturing method includes: preparing a base steel sheet, plating the prepared base steel sheet with Ni, and continuously annealing the Ni-plated base steel sheet, followed by Al-based plating.

The base steel sheet is as described above, and the process of preparing the base steel sheet may be obtained by heating, hot rolling, coiling, and cold rolling a steel slab satisfying the above-described steel composition.

After heating the steel slab satisfying the above-described composition to 1050 to 1300°C, hot rolling is performed on the steel slab. Since a steel slab structure is not sufficiently homogenized when a heating temperature is below 1050°C, it may difficult to re-dissolved when a precipitation element is used, and when the temperature exceeds 1300°C, excessive oxide layer may be formed, which may result in an increase in manufacturing costs for removing an oxide layer, and there may be a high possibility of surface defects after hot rolling.

A finish rolling temperature of the hot rolling may be in a temperature range of 800 to 950°C. When the finish rolling temperature is less than 800°C, two-phase rolling may be performed to introduce ferrite into a surface layer of a steel sheet, which may find it difficult to control a sheet shape. On the other hand, when the temperature exceeds 950°C, hot rolled crystal grains may coarsened.

After the hot rolling, the coiling is performed in a temperature range of 500 to 700°C. When a coiling temperature is less than 500°C, since martensite is entirely or partially formed in the steel sheet, it may be difficult to control the shape of the coil, and follow-up cold rollability due to an excessive increase in strength of a hot rolled steel sheet may be deteriorated. On the other hand, when the temperature exceeds 700°C, coarse carbide may be excessively formed and crack generation may be promoted when stress occurs in the hot press formed parts, so there may be a concern that collision resistance may be deteriorated.

Then, a cold rolling process is performed. However, a pickling process may be further performed to remove surface oxide before cold rolling. If necessary, the steel sheet may be used as the base steel sheet for hot press forming by performing plating without performing the cold rolling.

A cold reduction rate during the cold rolling is performed to obtain a predetermined thickness, and may be preferably performed at a reduction rate of 30 to 80%.

The surface of the base steel sheet prepared as described above is plated with Ni. As an example of the Ni plating, Ni flash plating may be performed. The Ni flash plating is one of the kind of electroplating methods performed before annealing, and is performed by using a Ni electrolyte and controlling the amount of a current during electroplating. The Ni plating may be preferably performed in an amount of 150 to 2500 mg/m$^2$ on the surface of the base steel sheet.

The amount of Ni plating adhesion performed by the Ni plating may be preferably 150 to 2500 mg/m$^2$. When the amount of Ni plating adhesion is less than 150 mg/m$^2$, the effect of the present disclosure may not be sufficiently exhibited because Ni is not concentrated in a plating layer in a heat treatment for hot press forming. When the amount of Ni plating adhesion exceeds 2500 mg/m$^2$, local platingless portions may be generated in the steel sheet due to excessive current concentration during electroplating, and an electroplating solution for Ni application may be excessively used to significantly increase manufacturing costs. Accordingly, the amount of Ni plating adhesion may be preferably 2500 mg/m$^2$ or less. On the other hand, the amount of Ni plating adhesion may be more preferably 200 to 2000 mg/m$^2$.

The Ni-plated base steel sheet is continuously annealed, followed by Al-based plating. The annealing temperature during annealing may be preferably 740 to 860°C. When the annealing temperature is less than 740°C, since recrystallization of a cold-rolled structure is not sufficiently completed, the sheet shape may be defective and the strength after plating may be too high, thereby causing mold wear during a blanking process. On the other hand, when the temperature exceeds 860°C, the formation of the surface oxide may be promoted during the annealing process, thereby causing defects on the plated surface during the Al-based plating. In addition, it is preferable that an atmosphere is a non-oxidizing atmosphere during an annealing heat treatment, and hydrogen-nitrogen mixed gas or the like may be used. In this case, a dew point temperature of atmospheric gas may be preferably -75 to -20°C. In order to maintain the dew point temperature below -75°C, additional equipment for controlling the dew point temperature may be required to increase the manufacturing costs, and when the dew point temperature exceeds -20°C, annealed oxide is formed on the surface of the steel sheet during the annealing, resulting in surface quality defects such as platingless portions.

After the annealing, the Al-based plating is performed. The Al-based plating denotes aluminum or aluminum alloy plating, and any plating layer applied to a plated steel sheet for hot press forming may be applied to the present invention without limitation.

The Al-based plating may be preferably immersed in an Al-based plating bath, and according to a preferred example embodiment, the plating bath composition may include silicon (Si): 6 to 12 wt%, iron (Fe): 1 to 4 wt%, and a remainder of aluminum (Al) and unavoidable impurities.

The amount of plating adhesion during the Al-based plating may be preferably 20 to 140 $g/m^2$ on each side. When the amount of plating adhesion on each side is less than 20 $g/m^2$, it may be difficult to secure desired corrosion resistance of the hot press formed parts. On the other hand, when the amount of plating adhesion on each side exceeds 140 $g/m^2$, the manufacturing costs may increase due to excessive plating adhesion, and it may not easy to uniformly plate the plating layer in a full width and length direction of a coil.

Next, hot press formed parts according to another aspect of the present disclosure will be described in detail. According to a preferred example embodiment, the hot press formed parts may be obtained by performing hot press forming on the above-mentioned plated steel sheet for hot press forming.

The hot press formed parts may include base iron and an alloy plating layer formed on the base iron, and as a result of measuring the Ni content up to 15 um from a surface of the alloy plating layer, the Ni content at point (Nimax) in which the Ni content is the highest may be 0.1 wt% or more. According to an example embodiment of the method of identifying the Nimax, the Nimax may be confirmed by analyzing a graph obtained as a result of Glow Discharge Optical Emission Spectroscopy (GDS) . When the Ni content in the Nimax is less than 0.1 wt%, since a Ni-concentrated layer is not sufficiently formed, the occlusion of external hydrogen during the hot press forming may not be effectively disturbed, which may make it difficult to ensure hydrogen embrittlement resistance. With an increase in the Ni content in the Nimax, the effect of suppressing the occlusion of hydrogen may be increased, but when the Ni content is excessive, there may be a concern that costs may increase due to an increase in Ni adhesion, and environmental problems may occur during welding. Accordingly, it is preferable that the Ni content not to exceed 0.75 wt%.

In the process of heating the Al-based plating layer by hot press forming, the alloy plating layer is a layer obtained by reacting and alloying components and the base iron of the plating layer, and the alloy plating layer of the present disclosure is not particularly limited thereto.

Meanwhile, it is preferable that the Ni-concentrated layer is included in the alloy plating layer. There may be various methods for identifying the Ni-concentrated layer. According to a preferred example embodiment, a graph of a concentration profile derived using the Glow Discharge Optical Emission Spectroscopy (GDS) in a thickness direction of the parts on the surface of the alloy plating layer may be used. In the concentration profile graph, a width between a first point (Nio) in which a slope of the graph becomes O in a surface direction of the parts from the point (Nimax) with the highest content of Ni and a point (Nio') having the same content as the point (Nio) in a depth direction of the parts from the Nimax may be defined as the Ni-concentrated layer.

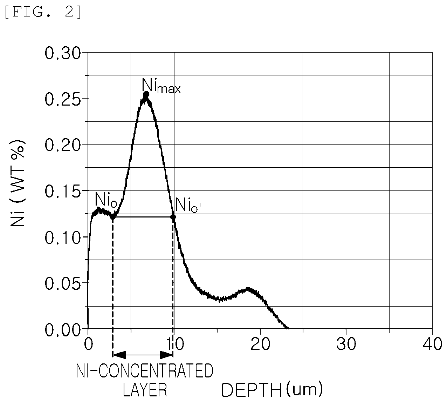

FIG. 2 is a concentration profile graph obtained by analyzing, with the GDS, the Ni content in the hot press formed parts of Invention Example 3 in the following embodiment. In FIG. 2, Nimax, Nio, and Nio' may be derived to confirm the Ni-concentrated layer.

The thickness of the Ni-concentrated layer is not particularly limited, and may vary according to heat treatment conditions during plating and hot press forming. According to a specific example embodiment, the thickness of the Ni-concentrated layer may be preferably 1 to 15 um. When the thickness of the Ni-concentrated layer is less than 1 $\mu m$, it may be difficult to secure sufficient hydrogen embrittlement resistance, and when the thickness thereof exceeds 15 $\mu m$, excessive Ni flash plating may be performed, which may increase costs and cause environmental problems during welding.

The amount of diffusible hydrogen of the hot press formed parts may be preferably 0.3 wt ppm or less. The amount diffusible hydrogen of the hot press formed parts may be measured using a thermal description analysis (TDA) device, and according to a specific manner, the temperature is increased by about 400°C at a temperature increasing rate of 20°C/s, and a diffusible hydrogen curve is measured by maintaining time so as to have a sufficient diffusible hydrogen peak, which is a value obtained by integrating the curve.

Although there is no significant difference in alloy composition between the base steel sheet of the plated steel sheet for hot press forming and the base iron of the hot press formed parts, it may preferably be to distinguish the base steel sheet from the base iron because they may differ in microstructure. Accordingly, in the present disclosure, the base steel sheet is distinguished from the base iron in that the base steel sheet is used in the plated steel sheet for hot press forming, and the base iron is used in the hot press formed parts. On the other hand, the base steel sheet of the plated steel sheet for hot press forming is formed to have ferrite and pearlite structures, but in the base iron of the hot press formed parts formed by hot press forming, martensite may be formed as a main phase and bainite may be formed as a partial phase.

Hereinafter, a method of manufacturing hot press formed parts according to another aspect of the present disclosure will be described. To this end, there is provided a blank including a base steel sheet and an Al-based plating layer formed on a surface of the base steel sheet, where an average Ni content in the Al-based plating layer is 0.05 to 0.35 wt%. According to an example for providing the blank, the blank may be manufactured using the above-described plated steel sheet for hot press forming.

It is preferable that the provided blank is heated above an austenite single-phase region temperature, more specifically, in a temperature range of Ac3 to 975°C. When the heating temperature is below the Ac3 temperature, it may be difficult to secure strength and collision resistance due to the presence of untransformed ferrite according to a dual-phase region section. On the other hand, when the heating temperature exceeds 975°C, excessive oxides may be generated on the surface of the parts, which may make it difficult to secure spot weldability, and manufacturing costs for maintaining a high temperature may increase. It is preferable that the heated blank is maintained in the temperature range for 1 to 1000 seconds. When the maintaining time is less than 1 second, uniform temperature distribution throughout the blank may be difficult, resulting in material deviation by position, and when the maintaining time is more than 1000 seconds, the spot weldability may be difficult to secure due to excessive oxide generation on the surface, and the manufacturing costs of the parts may be increase. The Ar3 may be derived by following Relational Expression.

$$Ar3 = 902 - 255C + 19Si - 11Mn - 5Cr \ [°C]$$

(where C, Si, Mn, and Cr refer to the content of each component.)

A process of transferring the heated blank to a press molding and cooling the transferred blank is performed. In this case, a cooling rate may be preferably 20°C/s or more. When the cooling rate is less than 20°C/s, a ferrite phase may be introduced during cooling and be generated in a grain boundary, and physical properties such as strength and collision resistance may be deteriorated. The processes of transferring, molding, and cooling the blank are not particularly limited, and a process normally used for a hot press forming method may be unchangeably applied to the present disclosure.

Mode for Invention

Hereinafter, example embodiments of the present disclosure will be described in detail. The following example embodiments are for understanding the present disclosure and are not for interpreting the scope of the present disclosure.

(Embodiment)

First, a steel slab satisfying a steel composition (unit is wt%) of Table 1 below was vacuum-dissolved and manufactured in a thickness of 60 mm. In this case, a remainder of the steel composition not described in Table 1 is Fe and unavoidable impurities. The prepared steel slab was heated to 1200°C and maintained for 1 hour and was then subject to a hot rolling process, and was finished at a hot rolling end temperature of 900°C and coiled at a temperature of 600°C. Then, cold rolling was performed to prepare a cold rolled steel sheet having a thickness of 1.5 mm.

Ni plating was performed on the cold rolled steel sheet through a Ni flash treatment. In this time, the amount of Ni plating adhesion is illustrated in Table 1. The Ni flash treatment is electroplating using a Ni electrolyte, and adjusted the amount of adhesion by adjusting the amount of current during the electroplating.

The cold rolled steel sheet, subjected to the Ni flash treatment, was annealed, and an Al-based plating bath including Si: 9 wt%, Fe: 2 wt%, and a remainder of Al and unavoidable impurities was used, where a plating temperature was about 660°C, and the amount of plating adhesion was 75 g/m$^2$ on each side. The continuous annealing was performed at a temperature of 800°C.

The average content of Ni distributed in the Al-based plating layer of the plated steel sheet prepared as described above was measured and shown in Table 2. As described above, the Al-based plating layer was measured by including the plating layer and a concentration gradient layer (to a point where a Fe content is 80 wt% or less in the Al-based plating layer), and was analyzed using Glow Discharge Optical Emission Spectrometry (GDS) using GDS850A (model name, a product by LECO) DC and RF equipment.

In addition, in order to examine the adhesion of plating after Ni electroplating, the length of a major axis of a portion peeled off from the steel sheet was measured by visually examining the produced plated steel sheet, and the evaluation and Table 2 was shown based on the following criteria.

○: The length of the major axis of the peeled portion is 3 mm or less.

X: The length of the major axis of the peeled portion is more than 3 mm.

The blank was manufactured using the plated steel sheet, heated to 900°C, maintained for 6 minutes, and transferred to a mold within 10 seconds, and was subjected to molding and cooling. In this case, the cooling was performed at a cooling rate of 20 to 40°C/s. In the hot press formed parts manufactured in this manner, the Ni content at the point (Nimax) in which the Ni content is the highest from the surface of the alloy plating layer to 15 um in the depth direction was analyzed using the GDS, and the results thereof are illustrated in Table 2. Furthermore, the amount of diffusible hydrogen in the parts was measured and shown in Table 2.

[Table 1]

| Steel Type | C | Si | Mn | P | S | Al | Cr | N | Ti | B | Ni adhesion (mg/m²) |
|---|---|---|---|---|---|---|---|---|---|---|---|
| A | 0.218 | 0.31 | 1.1 | 0.012 | 0.001 | 0.028 | 0.19 | 0.004 2 | 0.027 | 0.002 6 | 300 |
| B | 0.222 | 0.4 | 1.2 | 0.013 | 0.001 | 0.023 | 0.08 | 0.003 5 | 0.029 | 0.002 6 | 200 |
| C | 0.105 | 0.26 | 1.6 | 0.01 | 0.001 | 0.034 | 0.4 | 0.004 6 | 0.031 | 0.002 7 | 500 |
| D | 0.310 | 0.35 | 2.1 | 0.011 | 0.001 | 0.029 | 0.2 | 0.004 | 0.03 | 0.002 5 | 400 |
| E | 0.325 | 0.61 | 2.1 | 0.011 | 0.001 | 0.026 | 0.19 | 0.004 9 | 0.031 | 0.002 5 | 1000 |
| F | 0.071 | 0.58 | 3.6 | 0.011 | 0.001 | 0.023 | 0.17 | 0.005 3 | 0.032 | 0.002 5 | 2000 |
| G | 0.147 | 0.60 | 1.1 | 0.011 | 0.002 | 0.031 | 0.21 | 0.004 1 | 0.027 | 0.003 | 800 |
| H | 0.343 | 0.90 | 0.6 | 0.013 | 0.001 | 0.05 | 0.3 | 0.004 3 | 0.029 | 0.002 9 | 1500 |
| I | 0.230 | 0.52 | 1.2 | 0.008 | 0.001 | 0.025 | 0.3 | 0.004 7 | 0.025 | 0.002 5 | <u>100</u> |
| J | 0.208 | 0.31 | 1.2 | 0.009 | 0.002 | 0.033 | 0.31 | 0.002 9 | 0.03 | 0.002 6 | <u>10</u> |
| K | 0.237 | 0.20 | 1.4 | 0.008 | 0.002 | 0.042 | 0.21 | 0.002 7 | 0.028 | 0.002 6 | <u>2550</u> |
| L | 0.327 | 0.28 | 1.0 | 0.008 | 0.002 | 0.030 | 0.10 | 0.002 7 | 0.028 | 0.002 6 | <u>2700</u> |

[Table 1]

| Steel Type | Average Ni Content in Plating Layer of Plated Steel Sheet (wt%) | Plating adhesion of Plated Steel Sheet | Ni Content at Point with highest Ni Content from Surface of Alloy Plating Layer in Hot Press Formed Parts to 15 μm (wt%) | Amount of Diffusible Hydrogen in Hot Press Formed Parts (ppm) | Division |
|---|---|---|---|---|---|
| A | 0.112 | ○ | 0.123 | 0.2407 | Invention Example 1 |
| B | 0.055 | ○ | 0.104 | 0.2872 | Invention Example 2 |
| C | 0.186 | ○ | 0.251 | 0.1880 | Invention Example 3 |
| D | 0.153 | ○ | 0.208 | 0.2106 | Invention Example 4 |
| E | 0.264 | ○ | 0.359 | 0.1331 | Invention Example 5 |
| F | 0.335 | ○ | 0.734 | 0.1204 | Invention Example 6 |

(continued)

| Steel Type | Average Ni Content in Plating Layer of Plated Steel Sheet (wt%) | Plating adhesion of Plated Steel Sheet | Ni Content at Point with highest Ni Content from Surface of Alloy Plating Layer in Hot Press Formed Parts to 15 μm (wt%) | Amount of Diffusible Hydrogen in Hot Press Formed Parts (ppm) | Division |
|---|---|---|---|---|---|
| G | 0.207 | ○ | 0.316 | 0.1570 | Invention Example 7 |
| H | 0.306 | ○ | 0.503 | 0.1301 | Invention Example 8 |
| I | 0.037 | ○ | 0.065 | 0.3231 | comparative Example 1 |
| J | 0.001 | ○ | 0.003 | 0.3610 | comparative Example 2 |
| K | 0.393 | X | 0.837 | 0.1116 | comparative Example 3 |
| L | 0.403 | X | 0.861 | 0.1051 | comparative Example 4 |

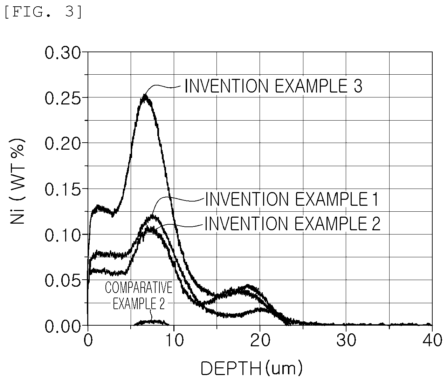

Meanwhile, FIG. 1 is a graph of analyzing, with the GDS, the Fe and Ni contents in the Al-based plating layer of the plated steel sheet for hot press forming of the invention example 1. In addition, FIG. 2 is a graph of analyzing, with the GDS, the Ni content in the alloy plating layer in the hot press formed parts of Invention Examples 1 to 3 and Comparative Example 2. FIG. 3 is a graph of showing the maximum Ni content and the amount of diffusible hydrogen in the alloy plating layer in the hot press formed parts of Invention Examples 1 to 8 and Comparative Examples 1 and 2.

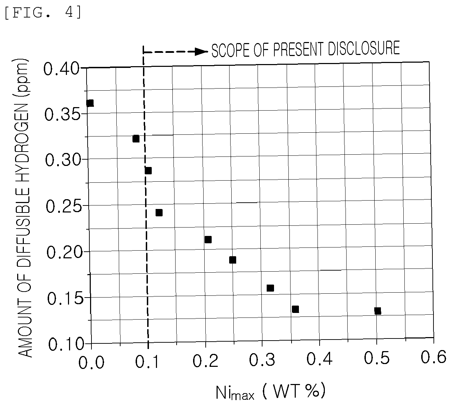

As may be seen from the results of Table 2 and FIGS. 1 to 4 obtained through the above-described example embodiments, it may be found that the invention examples within the scope of the present disclosure have excellent plating adhesion on the plated steel sheet and excellent hydrogen embrittlement resistance when the hot press forming is performed on the plated steel sheet.

However, in Comparative Examples 1 and 2, which were not subjected to the Ni flash plating or were subject to less flash plating beyond the scope of the present invention, since sufficient Ni was not secured in the alloy plating layer after hot press forming, it was difficult to secure the hydrogen embrittlement resistance required by the present disclosure.

On the other hand, in Comparative Examples 2 and 3 in which the amount of Ni flash plating was excessively applied, the hydrogen embrittlement resistance could be ensured, but it was confirmed that a burning phenomenon in the steel sheet during plating resulted in platingless to deteriorate the plating adhesion.

**Claims**

1. A plated steel sheet for hot press forming having excellent hydrogen embrittlement resistance, comprising:

    a base steel sheet; and
    an Al-based plating layer formed on a surface of the base steel sheet,
    wherein an average Ni content in the Al-based plating layer is 0.05 to 0.35 wt%.

2. The plated steel sheet for hot press forming having excellent hydrogen embrittlement resistance of claim 1, wherein the base steel sheet comprises:
    by wt%, C: 0.07 to 0.5%, Si: 0.05 to 1%, Mn: 0.5 to 4%, P: 0.001 to 0.015%, S: 0.0001 to 0.02%, Al: 0.01 to 0.1%, Cr: 0.01 to 1%, N: 0.001 to 0.02%, Ti: 0.01% or less, B: 0.01% or less, and a remainder of Fe and unavoidable impurities.

3. The plated steel sheet for hot press forming having excellent hydrogen embrittlement resistance of claim 1, wherein the Al-based plating layer comprises an Al-rich layer and a concentration gradient layer.

4. A method of manufacturing a plated steel sheet for hot press forming having excellent hydrogen embrittlement resistance, the method comprising:

   preparing a base steel sheet;
   plating the prepared base steel sheet with Ni in a coating weight of 150 to 2500 mg/m$^2$; and
   continuously annealing the Ni-plated cold rolled steel sheet, followed by Al-based plating.

5. The method of manufacturing a plated steel sheet for hot press forming having excellent hydrogen embrittlement resistance of claim 4, wherein the preparing a base steel sheet comprises:

   preparing a steel slab comprising, by wt%, C: 0.07 to 0.5%, Si: 0.05 to 1%, Mn: 0.5 to 4%, P: 0.001 to 0.015%, S: 0.0001 to 0.02%, Al: 0.01 to 0.1%, Cr: 0.01 to 0.1%, N: 0.001 to 0.02%, Ti: 0.1% or less, B: 0.01% or less, and a remainder of Fe and unavoidable impurities;
   heating the steel slab to 1050 to 1300°C;
   preparing a hot rolled steel sheet by subjecting finish hot rolling to the heated steel slab in a temperature range of 800 to 950°C;
   coiling the hot rolled steel sheet in a temperature range of 500 to 700°C; and
   after the coiling, pickling and cold rolling the hot rolled steel sheet at a reduction rate of 30 to 80%.

6. The method of manufacturing a plated steel sheet for hot press forming having excellent hydrogen embrittlement resistance of claim 4, wherein continuous annealing is performed in a temperature range of 740°C to 860°C and a dew point temperature of -75°C to -25°C.

7. Hot press formed parts having excellent hydrogen embrittlement, comprising:

   base iron; and
   an alloy plating layer formed on the base iron,
   wherein
   a Ni content at a point (Nimax) in which the Ni content is the highest, up to 15 um in a depth direction from a surface of the alloy plating layer, is 0.1 to 0.75% wt%.

8. The hot press formed parts having excellent hydrogen embrittlement of claim 7, wherein the alloy plating layer comprises a Ni-concentrated layer, and
   in a concentration profile graph from which the Ni content of the alloy plating layer is derived using Glow Discharge Optical Emission Spectroscopy (GDS), the Ni-concentrated layer refers to a width between a point (Nio) in which a slope of the graph becomes O in a surface direction of the parts from the point (Nimax) with the highest content of Ni and a point (Nio') having the same content as the point (Nio) in a depth direction of the parts from the Nimax.

9. The hot press formed parts having excellent hydrogen embrittlement of claim 8, wherein the Ni-concentrated layer has a thickness of 1 to 15 $\mu$m.

10. The hot press formed parts having excellent hydrogen embrittlement of claim 7, wherein the amount of diffusible hydrogen of the hot press formed parts is 0.3 wt ppm or less.

11. The hot press formed parts having excellent hydrogen embrittlement of claim 7, wherein a main phase of the base iron is martensitic.

12. A method of manufacturing hot press formed parts having excellent hydrogen embrittlement resistance, the method comprising:

    providing a blank comprising a base steel sheet and an Al-based plating layer formed on a surface of the base steel sheet, wherein an average Ni content in the Al-based plating layer is 0.05 to 0.35 wt%;
    heating the blank in a temperature range of Ac3 to 975°C; and
    transferring and molding the heated blank to a press, and cooling the blank at a cooling rate of 20°C/s or higher.

13. The method of manufacturing hot press formed parts having excellent hydrogen embrittlement resistance of claim 12, wherein the blank is maintained in the temperature range for 1 to 1000 seconds.

[FIG. 1]

[FIG. 2]

[FIG. 3]

[FIG. 4]

## INTERNATIONAL SEARCH REPORT

| International application No. |
|---|
| **PCT/KR2022/006922** |

| A. | CLASSIFICATION OF SUBJECT MATTER |
|---|---|

**C23C 2/12**(2006.01)i; **C23C 2/40**(2006.01)i; **C23C 2/02**(2006.01)i; **C23C 28/02**(2006.01)i; **C22C 38/38**(2006.01)i; **C22C 38/06**(2006.01)i; **C22C 38/00**(2006.01)i; **C22C 38/28**(2006.01)i; **C21D 8/02**(2006.01)i

According to International Patent Classification (IPC) or to both national classification and IPC

| B. | FIELDS SEARCHED |
|---|---|

Minimum documentation searched (classification system followed by classification symbols)

C23C 2/12(2006.01); C21D 1/18(2006.01); C21D 1/673(2006.01); C22C 18/04(2006.01); C22C 38/04(2006.01); C22C 38/08(2006.01); C23C 2/02(2006.01); C23C 2/06(2006.01); C23C 24/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수소취성(hydrogen brittleness), 알루미늄(aluminium), 니켈(nickel), 도금(plating), 소둔(annealing)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2020-0076788 A (POSCO) 30 June 2020 (2020-06-30)<br>See paragraphs [0041]-[0082], [0127]-[0131], [0141]-[0148], [0172]-[0174] and [0191]-[0193] and figure 4. | 1-13 |
| Y | KR 10-2017-0029012 A (ARCELORMITTAL) 14 March 2017 (2017-03-14)<br>See paragraphs [0033], [0044], [0081]-[0085], [0112], [0118] and [0129] and figures 3-4. | 1-13 |
| Y | KR 10-2016-0057418 A (THYSSENKRUPP STEEL EUROPE AG) 23 May 2016 (2016-05-23)<br>See paragraphs [0026]-[0028]. | 3 |
| Y | KR 10-2015-0073317 A (POSCO) 01 July 2015 (2015-07-01)<br>See paragraph [0036]. | 6 |
| A | WO 2019-132293 A1 (POSCO) 04 July 2019 (2019-07-04)<br>See paragraphs [0100]-[0105]. | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 August 2022** | **19 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

EP 4 343 015 A1

## INTERNATIONAL SEARCH REPORT
### Information on patent family members

International application No.

**PCT/KR2022/006922**

| Patent document cited in search report | | | Publication date (day/month/year) | Patent family member(s) | | | Publication date (day/month/year) |
|---|---|---|---|---|---|---|---|
| KR | 10-2020-0076788 | A | 30 June 2020 | CN | 113195772 | A | 30 July 2021 |
| | | | | EP | 3901313 | A1 | 27 October 2021 |
| | | | | JP | 2022-515379 | A | 18 February 2022 |
| | | | | KR | 10-2153200 | B1 | 08 September 2020 |
| | | | | US | 2022-0042133 | A1 | 10 February 2022 |
| | | | | WO | 2020-130675 | A1 | 25 June 2020 |
| KR | 10-2017-0029012 | A | 14 March 2017 | BR | 112017007999 | A2 | 20 February 2018 |
| | | | | BR | 112017007999 | B1 | 01 June 2021 |
| | | | | CA | 2956537 | A1 | 04 February 2016 |
| | | | | CA | 2956537 | C | 24 March 2020 |
| | | | | CN | 106574348 | A | 19 April 2017 |
| | | | | CN | 106574348 | B | 15 June 2018 |
| | | | | EP | 3175006 | A1 | 07 June 2017 |
| | | | | EP | 3175006 | B1 | 06 March 2019 |
| | | | | JP | 2017-525849 | A | 07 September 2017 |
| | | | | JP | 2019-035149 | A | 07 March 2019 |
| | | | | JP | 6580123 | B2 | 25 September 2019 |
| | | | | JP | 6698128 | B2 | 27 May 2020 |
| | | | | KR | 10-1820273 | B1 | 19 January 2018 |
| | | | | KR | 10-2017-0132908 | A | 04 December 2017 |
| | | | | KR | 10-2129162 | B1 | 02 July 2020 |
| | | | | RU | 2017106289 | A | 28 August 2018 |
| | | | | RU | 2667189 | C2 | 17 September 2018 |
| | | | | UA | 118298 | C2 | 26 December 2018 |
| | | | | US | 2017-0253941 | A1 | 07 September 2017 |
| | | | | US | 2017-0298465 | A1 | 19 October 2017 |
| | | | | US | 2021-0214816 | A1 | 15 July 2021 |
| | | | | US | 9845518 | B2 | 19 December 2017 |
| | | | | WO | 2016-016676 | A1 | 04 February 2016 |
| | | | | WO | 2016-016707 | A1 | 04 February 2016 |
| KR | 10-2016-0057418 | A | 23 May 2016 | CN | 105531385 | A | 27 April 2016 |
| | | | | CN | 105531385 | B | 30 January 2018 |
| | | | | EP | 2848709 | A1 | 18 March 2015 |
| | | | | EP | 2848709 | B1 | 04 March 2020 |
| | | | | JP | 2016-539249 | A | 15 December 2016 |
| | | | | JP | 6640090 | B2 | 05 February 2020 |
| | | | | KR | 10-2301116 | B1 | 10 September 2021 |
| | | | | US | 10287647 | B2 | 14 May 2019 |
| | | | | US | 2016-0222484 | A1 | 04 August 2016 |
| | | | | WO | 2015-036151 | A1 | 19 March 2015 |
| KR | 10-2015-0073317 | A | 01 July 2015 | KR | 10-1585721 | B1 | 14 January 2016 |
| WO | 2019-132293 | A1 | 04 July 2019 | CN | 111587298 | A | 25 August 2020 |
| | | | | EP | 3733919 | A1 | 04 November 2020 |
| | | | | KR | 10-2019-0078411 | A | 04 July 2019 |
| | | | | KR | 10-2031463 | B1 | 11 October 2019 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6296805 B